# EUROPÄISCHE PATENTSCHRIFT

(11) **EP 2 411 190 B1**
(45) Veröffentlichungstag und Bekanntmachung des Hinweises auf die Patenterteilung: **05.06.2013**
(21) Anmeldenummer: 10710807.8
(22) Anmeldetag: 24.03.2010
(51) Int. Cl.: B25J 15/02, B25J 15/10

(54) **FLUIDTECHNISCHES GERÄT, INSBESONDERE GREIFERVORRICHTUNG**
FLUID-TECHNICAL DEVICE, IN PARTICULAR GRIPPING DEVICE
DISPOSITIF DE TECHNIQUE FLUIDIQUE, EN PARTICULIER DISPOSITIF DE PREHENSION

(30) Priorität: 26.03.2009 DE 102009015975
(43) Veröffentlichungstag der Anmeldung: 01.02.2012
(73) Patentinhaber: FESTO AG & Co. KG, 73734 Esslingen (DE)
(72) Erfinder: FISCHER, Markus, 73760 Ostfildern (DE); KAMINSKI, Ruwen, 70190 Stuttgart (DE)
(74) Vertreter: Kocher, Mark Werner
(86) Internationale Anmeldenummer: PCT/EP2010/001830
(87) Internationale Veröffentlichungsnummer: WO 2010/108662

(56) Entgegenhaltungen:
- EP-A1- 0 160 559
- DE-B3-102005 046 160

## Beschreibung

Die Erfindung betrifft ein fluidtechnisches Gerät, insbesondere eine Greifervorrichtung, mit wenigstens einer Anschlussanordnung zum Zuführen des Fluids, wobei das Gerät unter Einsatz eines generativen Fertigungsverfahrens aus Kunststoffmaterial hergestellt ist.

Derartige unter Einsatz eines generativen Fertigungsverfahrens hergestellte, als Greifervorrichtung ausgebildete fluidtechnische Geräte sind beispielsweise aus der DE 10 2005 046 160 C5 oder der DE 10 2006 022 855 A1 bekannt. Generative Fertigungsverfahren ist eine umfassende Bezeichnung für die häufig auch als Rapid Prototyping bezeichneten Verfahren zur schnellen und kostengünstigen Fertigung von Produkten. Diese Fertigung erfolgt direkt auf der Basis der rechnerinternen Datenmodelle, insbesondere aus formlosen Pulvern mittels chemischer und/oder physikalischer Prozesse. Obwohl es sich um urformende Verfahren handelt, sind für ein konkretes Erzeugnis keine speziellen Werkzeuge erforderlich, die die jeweilige Geometrie des Werkstückes gespeichert haben, zum Beispiel Gussformen. Unter verschiedenen bekannten Verfahren eignet sich vor allem das selektive Lasersintern zur Herstellung von fluidtechnischen Geräten, insbesondere Greifervorrichtungen. Dabei werden räumliche Strukturen durch Sintern aus einem pulverförmigen Ausgangsstoff hergestellt. In einem generativen Schichtbauverfahren wird das Werkzeug Schicht für Schicht aufgebaut. Durch die Wirkung der Laserstrahlen können so beliebige dreidimensionale Geometrien auch mit Hinterschneidungen erzeugt werden, zum Beispiel auch Werkstücke, die sich in konventioneller mechanischer oder gießtechnischer Fertigung nicht herstellen lassen. Dabei können einstückige oder ineinandergreifende mehrstückige Konstruktionen gleichzeitig mit demselben Prozess hergestellt werden. Grundvoraussetzung ist, dass die Geometriedaten des Produkts dreidimensional vorliegen und als Schichtdaten verarbeitet sind, beispielsweise als CAD-Daten.

Die aus den vorstehend genannten Druckschriften bekannten fluidischen Greifervorrichtungen besitzen eine Anschlussöffnung zum Zuführen des Fluids. Dieses wird üblicherweise über Fluidschläuche zugeführt. Zum Verbinden eines Fluidschlauches mit einer solchen Anschlussöffnung wird gemäß dem Stand der Technik eine üblicherweise aus Metall bestehende Anschlussverschraubung benötigt, die in die Anschlussöffnung eingeschraubt wird. Hierzu eignet sich beispielsweise eine Verschraubung gemäß der DE 200 08 129 U1. Diese ist mit einer Klemm- und Lösestruktur zum dichtenden und fixierenden Einstecken des Schlauches versehen. Diese Anschlussverschraubung als zusätzliches Teil führt zu erhöhten Kosten und Montageaufwand.

Eine alternative Anordnung zum Verbinden eines Fluidschlauches mit einer solchen Anschlussöffnung ist aus der EP 0160559 B1 bekannt. In der Anschlussöffnung befindet sich ein mit einer Krallenstruktur versehenes Halteteil, wobei die Krallenstruktur beim Einschieben eines Fluidschlauches diesen fixiert. Ein weiteres separates Auslöseteil wird zum Lösen der Krallenstruktur vom Fluidschlauch benötigt. Auch hier führen die zusätzlichen Teile zu erhöhten Kosten und zu erhöhtem Montageaufwand.

Eine Aufgabe der vorliegenden Erfindung besteht darin, ein fluidtechnisches Gerät der eingangs genannten Gattung so zu verbessern, dass zur Fluidversorgung ein Anschlussschlauch ohne zusätzliche Hilfsmittel an diesem Gerät angeschlossen werden kann.

Diese Aufgabe wird erfindungsgemäß durch ein fluidtechnisches Gerät mit den Merkmalen des Anspruchs 1 gelöst.

Das erfindungsgemäße fluidtechnische Gerät hat den Vorteil, dass die Anschlussanordnung beziehungsweise die entsprechende Einsteckausnehmung beim generativen Fertigungsverfahren ohne zusätzliche Arbeitsschritte mit einer Klemm- und Lösestruktur zum Fixieren und Lösen von Fluidschläuchen versehen wird. Eine zusätzliche Anschlussverschraubung kann daher entfallen, das heißt, der Fluidschlauch kann direkt in die mit der Klemm- und Lösestruktur versehene und durch das generative Fertigungsverfahren hergestellte Einsteckausnehmung eingesteckt werden, um sofort automatisch dichtend fixiert zu werden. Die Klemm- und Lösestruktur wird daher automatisch bei der Herstellung des fluidtechnischen Geräts gleich mithergestellt, ohne dass zusätzliche Arbeitsschritte erforderlich wären. Der daraus resultierende Verzicht auf eine Anschlussverschraubung führt zu einfacherer Montage und geringeren Kosten.

Durch die in den Unteransprüchen aufgeführten Maßnahmen sind vorteilhafte Weiterbildungen und Verbesserungen des im Anspruch 1 angegebenen fluidtechnischen Geräts möglich.

Besonders geeignet zur Herstellung von fluidtechnischen Geräten als generatives Fertigungsverfahren ist das selektive Lasersintern.

In der Einsteckausnehmung ist zweckmäßigerweise eine Dichtringstruktur zum dichtenden Halten eines Fluidschlauchs einstückig angeformt, so dass auf einen zusätzlichen Dichtring verzichtet werden kann.

Ebenfalls besonders vorteilhaft ist das einstückige Anformen einer ein Herausziehen eines eingesteckten Fluidschlauchs verhindernden ringförmigen Krallenstruktur in der Einsteckausnehmung. Auch diese Krallenstruktur kann besonders einfach ohne zusätzlichen Arbeitsaufwand durch das generative Fertigungsverfahren beziehungsweise selektive Lasersintern gebildet werden.

Die Lösestruktur weist ebenfalls in besonders vorteilhafter Weise in der Einsteckausnehmung ein axial verschiebbares, die Krallenstruktur zum Lösen eines eingesteckten Fluidschlauchs von diesem abhebendes rohrförmiges Auslöseteil auf. Während das übrige fluidtechnische Gerät durch das generative Fertigungsverfahren einstückig ausgebildet ist, liegt dieses Auslöseteil als separates Teil vor und kann dennoch ohne zusätzlichen Arbeitsschritt durch das generative Fertigungsverfahren gleichzeitig mit dem übrigen fluidtechnischen Gerät hergestellt werden. Dabei können ein Herausfallen des Auslöseteils verhindernde Arretierungen als hintergreifende Elemente in einfacher Weise hergestellt werden.

Das erfindungsgemäße fluidtechnische Gerät ist zweckmäßigerweise als Greifervorrichtung mit wenigstens zwei Greifern ausgebildet, wobei eine über die Anschlussanordnung mit Fluid beaufschlagbare Balgvorrichtung zum Bewegen der Greifer mechanisch mit diesen verbunden ist. Die Greifer sind dabei zweckmäßigerweise gelenkig an einer die Balgvorrichtung haltenden Basisstruktur angebracht und sind durch die sich bei Fluidbeaufschlagung ausdehnende Balgvorrichtung über Koppelelemente schwenkbar betätigbar. Erforderliche Gelenke und Anlenkungen können ebenfalls in einfacher Weise durch das generative Fertigungsverfahren realisiert werden.

Die Anschlusssnordnung ist zweckmäßigerweise an der Basisstruktur angeordnet, insbesondere am gegenüber den Greifern entgegengesetzten Endbereich.

Die Greifer bestehen in vorteilhafter Weise jeweils aus zwei flexiblen, am freien Greifende miteinander verbundenen Lamellen, die an einer schwenkbaren, über die Balgvorrichtung betätigbaren Greiferbasis beabstandet voneinander fixiert sind. Als besonders günstig hat es sich dabei erwiesen, wenn die beiden Lamellen durch mehrere gelenkig an den Lamellen angebrachte parallele Streben miteinander verbunden sind. Hierdurch ergibt sich der Vorteil, dass die Greifer beim Ergreifen eines Gegenstandes sich nach dem ersten Anlegen automatisch um den Gegenstand herumkrümmen und ihn so besonders gut fixieren.

Als Kunststoffmaterial hat sich Polyamid als besonders geeignet erwiesen.

Ein Ausführungsbeispiel der Erfindung ist in der Zeichnung dargestellt und in der nachfolgenden Beschreibung näher erläutert. Es zeigen:
- Figur 1: eine mit drei Greifern versehene Greifervorrichtung als fluidtechnisches Gerät in einer Seitenansicht als Ausführungsbeispiel der Erfindung,
- Figur 2: eine Schnittdarstellung der in Figur 1 dargestellten Greifervorrichtung gemäß der Schnittlinie B-B und
- Figur 3: eine vergrößerte Detaildarstellung der fluidischen, mit einer Klemm- und Lösestruktur versehenen Anschlussanordnung beziehungsweise Einsteckausnehmung für Fluidschläuche.

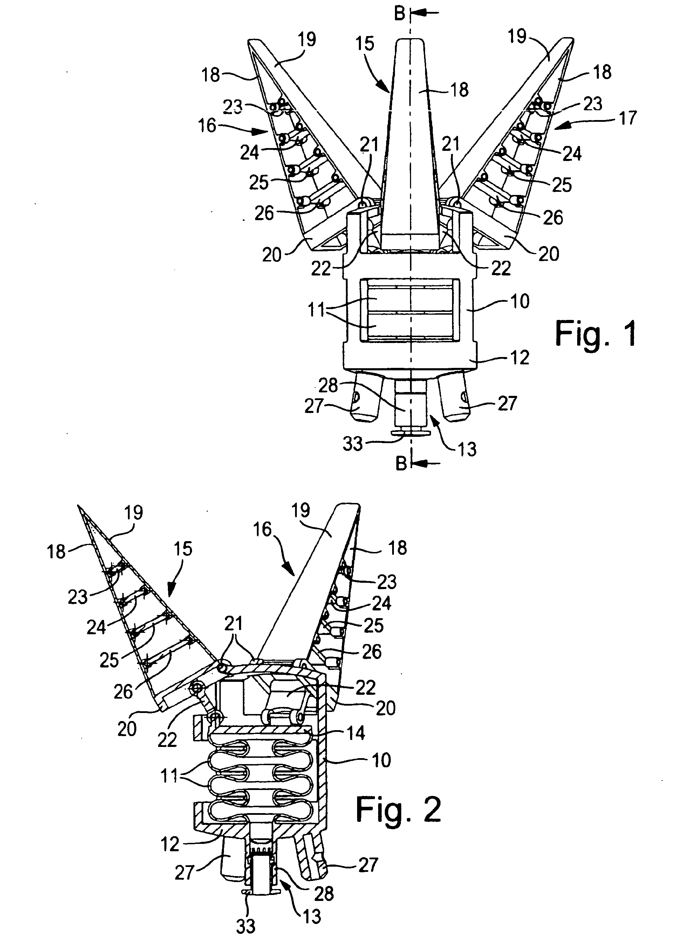

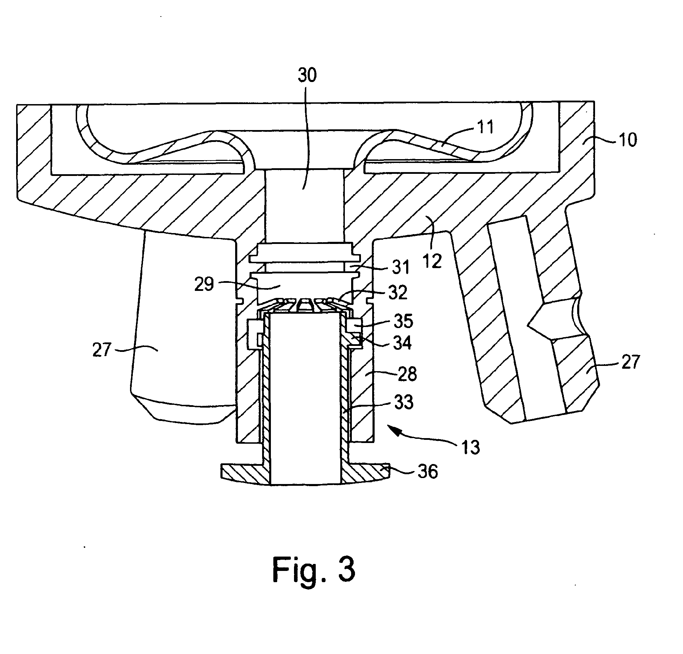

Die in den Figuren 1 bis 3 als Ausführungsbeispiel der Erfindung dargestellte fluidtechnische Greifervorrichtung als fluidtechnisches Gerät besteht aus einer gehäuseartigen Basisstruktur 10, in der eine einstückig angeformte Balgvorrichtung 11 angeordnet ist. Ein Endbereich der Balgvorrichtung 11 ist an einer Basisplatte 12 der Basisstruktur 10 angeformt und fluchtet mit einem ebenfalls einstückig an der Basisplatte 12 angeformten fluidischen Anschluss 13, der in Verbindung mit Figur 3 noch genauer beschrieben wird. Der gegenüberliegende Endbereich der Balgvorrichtung 11 ist durch eine Betätigungsplatte 14 abgeschlossen.

Am von der Basisplatte 12 entfernten Endbereich der Basisstruktur 10 sind drei Greifer 15-17 gelenkig angebracht. Jeder der Greifer 15-17 besteht aus zwei flexiblen, am freien Greiferende miteinander verbundenen Lamellen 18, 19, die unter Bildung einer dreieckartigen Anordnung beabstandet voneinander an einer Greiferbasis 20 fixiert sind. Jeweils ein Endbereich einer solchen Greiferbasis 20 ist über ein Schwenkgelenk 21 mit der Basisstruktur 10 verbunden. Die Betätigungsplatte 14 ist jeweils über ein Koppelelement 22 mit der Greiferbasis 20 der drei Greifer 15-17 verbunden. Dabei greifen die Koppelelemente 22 im mittleren Bereich der jeweiligen Greiferbasis 20, also beabstandet vom Schwenkgelenk 21, an. Die Koppelelemente 22 sind an beiden Enden gelenkig mit der Betätigungsplatte 14 und der jeweiligen Greiferbasis 20 verbunden, jedoch können unter Wegfall der gelenkigen Verbindungen die Koppelelemente 22 selbst auch flexibel ausgebildet sein.

Die beiden Lamellen 18, 19 der Greifer 15-17 sind zusätzlich noch durch vier parallele Streben 23-26 miteinander verbunden, die ihrerseits wieder parallel zur Greiferbasis 20 angeordnet sind. Diese parallelen Streben 23-26 sind jeweils an beiden Endbereichen gelenkig mit den Lamellen 18, 19 verbunden. Die Zahl der parallelen Streben 23-26 kann selbstverständlich auch variieren, und im einfachsten Fall können die Streben auch ganz entfallen.

An der Basisplatte 12 sind noch drei Halterungen 27 angeformt, die sich von der Außenseite aus erstrecken und zum Befestigen der gesamten Greifervorrichtung an einer nicht dargestellten Halterung dienen.

Bei über den fluidischen Anschluss 13 einströmendem Fluid dehnt sich die Balgvorrichtung 11 in Längsrichtung aus und verschiebt die Betätigungsplatte 14 von der Basisplatte 12 weg. Hierdurch werden die Greifer 15-17 mittels der Koppelelemente 22 gegeneinander geschwenkt und können dadurch einen nicht dargestellten Gegenstand ergreifen. Durch die beschriebene konstruktive Ausgestaltung der Greifer 15-17 legen sich diese bei Erreichen eines zu ergreifenden Gegenstands um diesen herum und bewirken dadurch ein besonders gutes Greifverhalten.

Die Zahl der Greifer 15-17 ist selbstverständlich nicht auf die Zahl drei beschränkt, sondern kann variieren. Mindestens müssen zwei Greifer vorhanden sein.

Wie bereits eingangs beschrieben, ist die gesamte Greifervorrichtung aus Kunststoffpulver mittels des generativen Fertigungsverfahrens hergestellt, wobei sich das selektive Lasersintern als generatives Fertigungsverfahren als besonders geeignet erwiesen hat. Im eingangs angegebenen Stand der Technik ist der Aufbau einer Greifervorrichtung durch ein solches Fertigungsverfahren ebenfalls detailliert beschrieben. Als Kunststoffmaterial beziehungsweise Kunststoffpulver zum Aufbau der Greifervorrichtung eignet sich vor allem Polyamid, jedoch sind auch andere Kunststoffmaterialien verwendbar.

In Figur 3 ist der fluidische Anschluss 13 vergrößert dargestellt. Er besteht im Wesentlichen aus einem einstückig an der Basisplatte 12 angeformten Rohrstück 28, dessen Innenraum als Einsteckausnehmung 29 für einen nicht dargestellten Fluidschlauch ausgebildet ist. Die Einsteckausnehmung 29 ist über einen Verbindungskanal 30 mit dem Innenraum der Balgvorrichtung 11 verbunden. Von der Innenwandung der Einsteckausnehmung 29 erstreckt sich eine Ringerhebung 31 beziehungsweise Ringlippe radial nach innen und dient als Dichtelement, das am einzusteckenden Fluidschlauch ausdichtend anliegt. Axial daneben ist eine ringförmige Krallenstruktur 32 einstückig an der Innenwandung der Einsteckausnehmung 29 angeformt, deren Krallen beziehungsweise Lamellen schräg radial nach innen verlaufen und beim Einstecken eines Fluidschlauchs nach außen gebogen werden und dadurch ein Herausziehen des Fluidschlauchs hemmen beziehungsweise verhindern.

Ein im Wesentlichen rohrförmiges Auslöseteil 33 ist axial verschiebbar in der Einsteckausnehmung 29 geführt, wobei eine sich radial nach außen erstreckende, einstückig angeformte Arretierung 34 des Auslöseteils 33 in eine Ringnut 35 der Einsteckausnehmung 29 eingreift und dadurch ein Herausfallen des Auslöseteils 33 verhindert. Die Ringnut 35 weist eine axiale Erstreckung auf, die so dimensioniert ist, dass sich das Auslöseteil 33 in der erforderlichen Weise axial verschieben lässt. Wird das Auslöseteil 33 mittels eines Auslöseringtellers 36 in die Einsteckausnehmung 29 hineingedrückt, so wird die Krallenstruktur 32 nach außen gebogen und gibt dadurch einen eingesteckten Fluidschlauch frei, der dann herausgezogen werden kann.

Eine solche Krallenstruktur 32 und ein diese nach außen biegendes Auslöseteil sind beispielsweise, allerdings als separate herkömmlich hergestellte Teile aus der eingangs genannten EP 0160559 B1 bekannt.

Die Ringerhebung 31 und die Krallenstruktur 32 sind einstückig mittels des generativen Fertigungsverfahrens am Rohrstück 28 angeformt, wobei das als separates Teil ausgebildete Auslöseteil 33 ebenfalls im gleichen Arbeitsvorgang durch das generative Fertigungsverfahren gebildet wird. Andere konstruktive Ausgestaltungen einer Klemm- und Lösestruktur, die von der dargestellten Krallenstruktur 32 und dem Auslöseteil 33 abweichen, sind selbstverständlich ebenfalls mittels des generativen Fertigungsverfahrens herstellbar.

Die Erfindung ist nicht auf eine Greifervorrichtung beschränkt, sondern ist auch auf andere fluidtechnische Geräte anwendbar, die mittels eines generativen Fertigungsverfahrens hergestellt werden, und die wenigstens eine Anschlussanordnung mit einer Klemm- und Lösestruktur für Fluidschläuche aufweisen. Solche fluidtechnischen Geräte sind beispielsweise Ventile, Kolben-Zylinder-Anordnungen, Linearantriebe, Drehantriebe und dergleichen.

Anstelle des bevorzugten selektiven Lasersinterns können auch andere generative Fertigungsverfahren eingesetzt werden, beispielsweise Sterolithografie, Fused Deposition Modelling, Laminated Object Modelling, 3 D Printing oder Kaltgasspritzen.

## Patentansprüche

1. Fluidtechnisches Gerät, insbesondere Greifervorrichtung, mit wenigstens einer fluidischen Anschlussanordnung (13) zum Zuführen von Fluid, wobei das Gerät unter Einsatz eines generativen Fertigungsverfahrens aus Kunststoffmaterial hergestellt ist, **dadurch gekennzeichnet, dass** die Anschlussanordnung (13) eine unter Einsatz des generativen Fertigungsverfahrens gebildete, mit einer Klemm- und Lösestruktur (32, 33) zum Fixieren und Lösen von ohne sonstige Hilfsmittel einzusteckenden Fluidschläuchen versehene Einsteckausnehmung (29) aufweist.

2. Gerät nach Anspruch 1, **dadurch gekennzeichnet, dass** das generatives Fertigungsverfahren als selektives Lasersintern ausgebildet ist.

3. Gerät nach Anspruch 1 oder 2, **dadurch gekennzeichnet, dass** in der Einsteckausnehmung (29) eine Dichtringstruktur (31) zum dichtenden Halten eines Fluidschlauchs einstückig angeformt ist.

4. Gerät nach einem der vorhergehenden Ansprüche, **dadurch gekennzeichnet, dass** in der Einsteckausnehmung (29) eine ein Herausziehen eines eingesteckten Fluidschlauchs verhindernde, ringförmige Krallenstruktur (32) einstückig angeformt ist.

5. Gerät nach Anspruch 4, **dadurch gekennzeichnet, dass** die Lösestruktur in der Einsteckausnehmung (29) ein axial verschiebbares, die Krallenstruktur (32) zum Lösen eines eingesteckten Fluidschlauchs von diesem abhebendes rohrförmiges Auslöseteil (33) aufweist.

6. Gerät nach einem der vorhergehenden Ansprüche, **dadurch gekennzeichnet, dass** es als Greifervorrichtung mit wenigstens zwei Greifern (15-17) ausgebildet ist, wobei eine über die Anschlussanordnung (13) mit Fluid beaufschlagbare Balgvorrichtung (11) zum Bewegen der Greifer (15-17) mechanisch mit diesen verbunden ist.

7. Gerät nach Anspruch 6, **dadurch gekennzeichnet, dass** die Greifer (15-17) gelenkig an einer die Balgvorrichtung (11) haltenden Basisstruktur (10) angebracht sind und durch die sich bei Fluidbeaufschlagung ausdehnende Balgvorrichtung (11) über Koppelelemente (22) schwenkbar betätigbar sind.

8. Gerät nach Anspruch 6 oder 7, **dadurch gekennzeichnet, dass** die Anschlussanordnung (13) an der Basisstruktur (10) angeordnet ist, insbesondere am gegenüber den Greifern (15-17) entgegengesetzten Endbereich.

9. Gerät nach Anspruch 8, **dadurch gekennzeichnet, dass** die Anschlussanordnung (13) an einer Basisplatte (12) der Basisstruktur (10) angeordnet ist.

10. Gerät nach einem der Ansprüche 6 bis 9, **dadurch gekennzeichnet, dass** die Greifer (15-17) jeweils aus zwei flexiblen, am freien Greifende miteinander verbundenen Lamellen (18, 19) bestehen, die an einer schwenkbaren, mittels der Balgvorrichtung (11) betätigbaren Greiferbasis (20) beabstandet voneinander fixiert sind.

11. Gerät nach Anspruch 10, **dadurch gekennzeichnet, dass** die beiden Lamellen (18, 19) durch mehrere gelenkig oder elastisch an den Lamellen (18, 19) angebrachte parallele Streben (23-26) miteinander verbunden sind.

12. Gerät nach einem der vorhergehenden Ansprüche, **dadurch gekennzeichnet, dass** das Kunststoffmaterial Polyamid ist.

## Claims

1. Fluidic device, in particular gripper device, with at least one fluidic port arrangement (13) for the supply of fluid, wherein the device is made of plastic material by an additive manufacturing process, **characterised in that** the port arrangement (13) has a plug-in recess (29), formed using an additive manufacturing process, with a clamping and release structure (32, 33) for the fixing and release of fluid hoses to be inserted without other aids.

2. Device according to claim 1, **characterised in that** the additive manufacturing process is in the form of selective laser sintering.

3. Device according to claim 1 or 2, **characterised in that** a seal ring structure (31) for the sealed holding of a fluid hose is integrally moulded into the plug-in recess (29).

4. Device according to any of the preceding claims, **characterised in that** an annular claw structure (32) preventing pulling-out of an inserted fluid hose is integrally moulded into the plug-in recess (29).

5. Device according to claim 4, **characterised in that** the release structure in the plug-in recess (29) has an axially movable tubular release element (33) which lifts the claw structure (32) from an inserted fluid hose so that the latter may be released.

6. Device according to any of the preceding claims, **characterised in that** it is in the form of a gripper device with at least two grippers (15-17), wherein a bellows unit (11) which is physically connected to the grippers (15-17) for their movement may be supplied with fluid via the port arrangement (13).

7. Device according to claim 6, **characterised in that** the grippers (15-17) are hinged to a base structure (10) holding the bellows unit (11) and may be swivelled via coupling elements (22) through expansion of the bellows unit (11) under fluidic pressurisation.

8. Device according to claim 6 or 7, **characterised in that** the port arrangement (13) is provided on the base structure (10), in particular at the end section opposite the grippers (15-17).

9. Device according to claim 8, **characterised in that** the port arrangement (13) is provided on a baseplate (12) of the base structure (10).

10. Device according to any of claims 6 to 9, **characterised in that** the grippers (15-17) are each made of two flexible lamellae (18, 19) joined together at the free gripping end and fixed, spaced apart, on a pivotable gripper base (20) which may be actuated by the bellows unit (11).

11. Device according to claim 10, **characterised in that** the two lamellae (18, 19) are joined together by several hinged or flexible parallel struts (23-26) attached to the lamellae (18, 19).

12. Device according to any of the preceding claims, **characterised in that** the plastic material is polyamide.

## Revendications

1. Appareil de technique fluidique, en particulier dispositif de préhension, comprenant au moins un système de raccordement (13) fluidique servant à amener le fluide, sachant que l'appareil est fabriqué à partir d'un matériau en matière plastique en utilisant un procédé de fabrication génératif, **caractérisé en ce que** le système de raccordement (13) présente un évidement d'insertion (29) formé en utilisant un procédé de fabrication génératif, pourvu d'une structure de serrage et de desserrage (32, 33) servant à fixer et à desserrer des tuyaux flexibles pour fluide à insérer sans autres accessoires.

2. Appareil selon la revendication 1, **caractérisé en ce que** le procédé de fabrication génératif se présente sous la forme d'un frittage sélectif au laser.

3. Appareil selon la revendication 1 ou 2, **caractérisé en ce qu'**une structure de bague d'étanchéité (31) est formée d'un seul tenant dans l'évidement d'insertion (29) afin de maintenir de manière étanche un tuyau flexible pour fluide.

4. Appareil selon l'une quelconque des revendications précédentes, **caractérisé en ce qu'**une structure à griffes (32) annulaire est formée d'un seul tenant dans l'évidement d'insertion (29), laquelle empêche toute sortie d'un tuyau flexible pour fluide inséré.

5. Appareil selon la revendication 4, **caractérisé en ce que** la structure de desserrage présente dans l'évidement d'insertion (29) une pièce de déclenchement (33) tubulaire pouvant être coulissée axialement, retirant la structure à griffes (32) d'un tuyau flexible pour fluide inséré afin de desserrer ce dernier.

6. Appareil selon l'une quelconque des revendications précédentes, **caractérisé en ce qu'**il se présente sous la forme d'un dispositif de préhension doté d'au moins deux organes de préhension (15 - 17), sachant qu'un dispositif à soufflets (11) pouvant être soumis à l'action d'un fluide par l'intermédiaire du système de raccordement (13) est relié aux organes de préhension (15 - 17) de manière mécanique afin de déplacer ces derniers.

7. Appareil selon la revendication 6, **caractérisé en ce que** les organes de préhension (15 - 17) sont installés de manière articulée au niveau d'une structure de base (10) maintenant le dispositif à soufflets (11) et peuvent être actionnés, de manière à pouvoir pivoter, par le dispositif à soufflets (11) se dilatant sous l'action du fluide, par l'intermédiaire d'éléments de couplage (22).

8. Appareil selon la revendication 6 ou 7, **caractérisé en ce que** le système de raccordement (13) est disposé au niveau de la structure de base (10), en particulier au niveau de la zone d'extrémité opposée aux organes de préhension (15 - 17).

9. Appareil selon la revendication 8, **caractérisé en ce que** le système de raccordement (13) est disposé au niveau d'une plaque de base (12) de la structure de base (10).

10. Appareil selon l'une quelconque des revendications 6 à 9, **caractérisé en ce que** les organes de préhension (15 - 17) sont constitués respectivement de deux lamelles (18, 19) flexibles, reliées l'une à l'autre au niveau de l'extrémité libre de préhension, lesquelles sont fixées de manière espacée l'une de l'autre au niveau d'une base d'organe de préhension (20) pouvant pivoter, pouvant être actionnée au moyen du dispositif à soufflets (11).

11. Appareil selon la revendication 10, **caractérisé en ce que** les deux lamelles (18, 19) sont reliées l'une à l'autre par plusieurs traverses (23 - 26) parallèles installées de manière articulée ou de manière élastique au niveau des lamelles (18, 19).

12. Appareil selon l'une quelconque des revendications précédentes, **caractérisé en ce que** le matériau en matière plastique est du polyamide.
